# EUROPEAN PATENT APPLICATION

(11) **EP 2 592 708 A1**
(43) Date of publication of application: **15.05.2013**
(21) Application number: 11868469.5
(22) Date of filing: 30.06.2011
(51) Int. Cl.: H02G 3/06

(54) **CABLE FIXING HEAD**

(71) Applicant: Beisit Electric (Hangzhou) Co., Ltd, Zhejiang 311100 (CN)
(72) Inventor: ZENG, Fanle, Hangzhou Zhejiang 311100 (CN)
(74) Representative: Coquel, Jean-Marc
(86) International application number: PCT/CN2011/076613
(87) International publication number: WO 2013/000139

(57) **Abstract**

A cable gland includes a nut (1), a waterproof ring (4), a tightening screw cap (5), and a tubular body (3) with external thread. A clamping end of the body (3) is provided with clamping claws spaced by a gap and extending in an axial direction of the body (3). A fixing protrusion protruding outwards is provided on an outer circumferential surface of the body (3), and the nut (1) is fitted with a fixed end of the body (3). A locating protrusion is provided on an inner side of the clamping claws. A limiting groove being open towards the locating protrusion is provided on an inner wall of the body (3). A locating groove fitted with the locating protrusion is provided at one end of the waterproof ring (4), and the other end of the waterproof ring (4) is inserted into the limiting groove. The tightening screw cap (5) is tightly screwed to the clamping end of the body (3). The cable gland prevents the waterproof ring (4) from being pushed out by cables, and the waterproof ring (4) may not easily be deformed, thereby avoiding a clearance from being generated between the waterproof ring (4) and the body (3), improving the sealing performance between the waterproof ring (4) and the body (3), preventing outside dust, moisture or the like from entering into the cabinet, and improving the stable performance of electrical components in the cabinet.

## Description

### FIELD OF THE INVENTION

The present application relates to the field of electrical devices, and specifically to a cable gland.

### BACKGROUND OF THE INVENTION

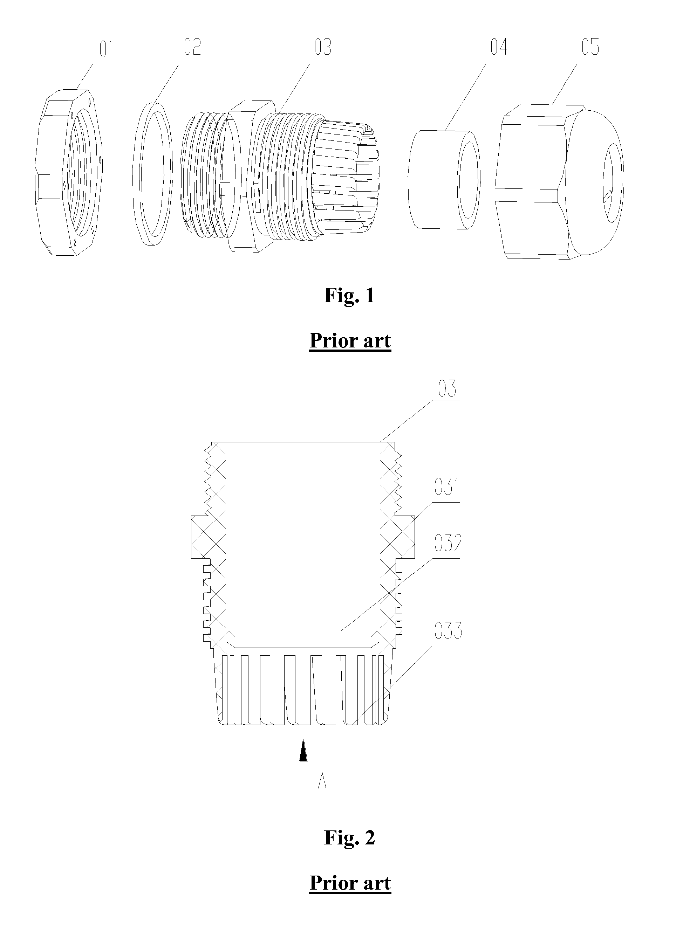

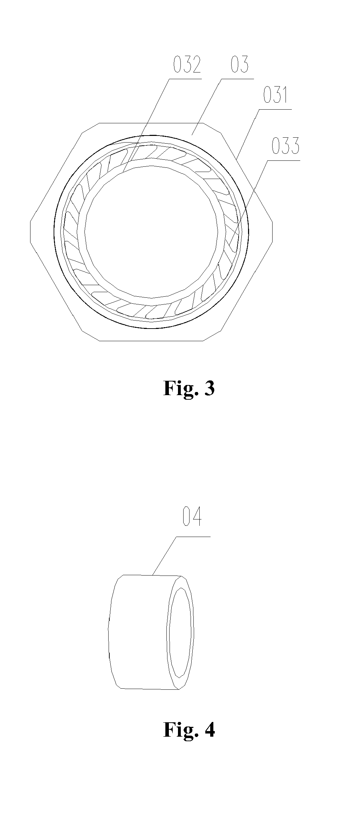

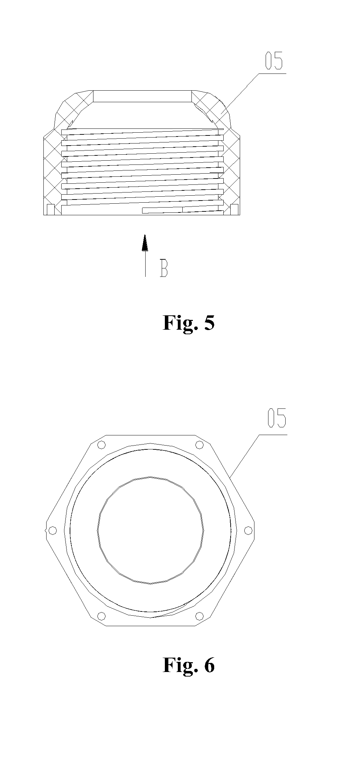

Currently, a cable gland is usually adopted for fixing a cable to a cabinet. As shown in Figures 1 to 6, the cable gland in the prior art includes a hexagon nut 01, an O-shaped washer 02, a body 03, a waterproof ring 04, and a tightening screw cap 05. The body 03 is a tube with external thread. A locating ring 032 protrudes inwards inside the body 03 to limit the position of an end of the waterproof ring 04 inserted into the body 03. In order to fix the cabinet, generally, a fixing protrusion 031 may be provided on a circumferential surface of the body 03 to facilitate an operation of a spanner when mounting. Clamping claws 033 spaced by a certain gap and extending in the direction of the axis of the body 03 are provided at a clamping end of the body 03. Generally, the waterproof ring 04 is a rubber ring made of rubber, or it may be made of other elastic materials as well. The tightening screw cap 05 is formed by providing a tightening part at an end of an ordinary nut, wherein the tightening part has gradually reduced diameter from the inside to the outside in an axial direction. After the tightening screw cap 05 is screwed on the body 03, the clamping claws 033 curves inwardly under the action of the tightening part of the tightening screw cap 05 so as to press and pinch the waterproof ring 04 inserted into the body 03, thereby ensuring that the waterproof ring 04 clamps the cable. The O-shaped washer 02 is disposed on a fixed end of the body 03 for ensuring the sealing between the body 03 and the cabinet. The hexagon nut 01 is screwed to the fixed end of the body 03.

When using the above cable gland in the prior art to fix the cable to the cabinet, the following steps may be followed: firstly, inserting the waterproof ring 04 into the body 03 such that an end of the waterproof ring 04 contacts with the locating ring 032; subsequently, placing the O-shaped washer 02 on the fixed end of the body 03, and inserting the fixed end of the body 03 into a mounting hole of the cabinet; then, screwing the hexagon nut 01 onto the fixed end of the body 03, so that the cabinet wall is fixed between the hexagon nut 01 and the O-shaped washer 02. Of course, the mounting process may be performed in other orders as long as the same technical effect can be achieved.

If a cable needs to be mounted at this moment, the cable passes through the tightening screw cap 05, the waterproof ring 04, the body 03, the O-shaped washer 02 and the hexagon nut 01 in sequence, and the tightening screw cap 05 is screwed on the clamping end of the body 03. In the process of mounting, when the cable passes through the waterproof ring 04 and the body 03, the waterproof ring 04 is prone to be pushed out, shift or be deformed and even to be pushed out to fall off under the force generated during the cable passing, and thus it is difficult for the locating ring 032 to locate the waterproof ring 04 in an axial direction. That is to say, the position of the waterproof ring 04 is easy to be shifted, and thus a clearance is generated between the waterproof ring 04 and the body 03, which causes the cable gland to be sealed insufficiently, and causes dust, moisture, or the like from outside to enter into the cabinet so as to influence the safety and stable performance of the electrical components in the cabinet. If there is no need to mount a cable temporarily after the cable gland mounting has finished, dust, moisture, or the like from outside is prone to enter into the cabinet through a passage in the tightening screw cap 05, the waterproof ring 04 and the body 03 for mounting a cable, impacting on the safety and the stable performance of the electrical components in the cabinet.

Therefore, how to improve the sealing performance of the cable gland is a technical problem to be solved by those skilled in the art currently.

Further, since the waterproof ring 04 is limited by means of the locating ring 032 protruding inwardly inside the body 03, a stepped surface is formed between the inner part of the body 03 and the waterproof ring 04. In this way, when the cable passes through the body 03, the waterproof ring 04 is more easily to be pushed out by the cable, thereby impacting on the sealing performance of the cable gland.

Furthermore, in operation, a mechanical vibration tends to be generated. Under the action of the mechanical vibration, the tightening screw cap 05 screwed on the body 03 will move back and get loose automatically so that the sealing performance of the cable gland is impacted, and in severe cases, the tightening screw cap 05 may fall off, which causes that the cable cannot be fixed with the cabinet and cannot be used normally.

### SUMMARY OF THE INVENTION

An object of the present application is to provide a cable gland for improving the sealing performance of the cable gland.

In order to solve the above technical problems, the present application provides technical solutions as follows:

A cable gland includes a nut, a waterproof ring, a tightening screw cap, and a tubular body with external thread. A clamping end of the body is provided with clamping claws spaced by a gap and extending in an axial direction of the body. A fixing protrusion protruding outwards is provided on an outer circumferential surface of the body, and the nut is fitted with a fixed end of the body. A locating protrusion is provided on an inner side of the clamping claws. A limiting groove being open towards the locating protrusion is provided on an inner wall of the body. A locating groove fitted with the locating protrusion is provided at one end of the waterproof ring, and the other end of the waterproof ring is inserted into the limiting groove. The tightening screw cap is tightly screwed to the clamping end of the body.

Preferably, a sealing membrane is sealed on one end of the waterproof ring close to the locating groove.

Preferably, an inner wall of the waterproof ring and the inner wall of the body are aligned in one plane.

Preferably, a locking protrusion is provided on an inner wall of a tightening part of the tightening screw cap, and is configured to be stuck in the gap between two adjacent clamping claws.

Preferably, extending directions of the locking protrusion and the gap between two adjacent clamping claws are all the same as a direction in which the tightening screw cap is tightened.

Preferably, the cable gland further includes an O-shaped sealing ring with a circular cross-section, and a sealing groove fitted with the O-shaped sealing ring is provided on a side of the fixing protrusion towards the fixed end.

Preferably, the tightening screw cap has a spanner stop protrusion protruding outwards.

Preferably, anti-skid stripes extending in a direction same as an axis direction of the tightening screw cap is provided on an outer circumferential surface of the tightening screw cap.

Preferably, the hexagon nut has a spanner stop protrusion protruding outwards.

Preferably, the nut is a hexagon nut, and the tightening screw cap is a hexagon screw cap, and the fixing protrusion is a hexagon fixing protrusion.

Compared with the above background technology, the cable gland according to the present application includes a nut, a waterproof ring, a tightening screw cap, and a tubular body with external thread. A clamping end of the body is provided with clamping claws spaced by a gap and extending in an axial direction of the body. A fixing protrusion protruding outwards is provided on an outer circumferential surface of the body, and the nut is fitted with a fixed end of the body. A locating protrusion is provided on an inner side of the clamping claws. A limiting groove being open towards the locating protrusion is provided on an inner wall of the body. A locating groove fitted with the locating protrusion is provided at one end of the waterproof ring, and the other end of the waterproof ring is inserted into the limiting groove. The tightening screw cap is tightly screwed to the clamping end of the body.

The mounting process of the cable gland and the fixation process of the cable according to the present application are the same as those in the prior art. The cable may pass through the tightening screw cap, the waterproof ring, the body and the nut in sequence, or it may pass through the nut, the body, the waterproof ring and the tightening screw cap in sequence as well. Of course, the cable may also be mounted in other orders, so long as the same technical effect may be achieved. No matter in which order the mounting is performed, in the process of mounting, as the cable passes through the waterproof ring and the body, the locating grove at one end of the waterproof ring is engaged with the locating protrusion on the inner side of the clamping claws, and the other end of the waterproof ring is inserted into the limiting groove of the body. In this way, the position of the waterproof ring is limited by two ends thereof, therefore avoiding the waterproof ring from being pushed out by the cable, and the waterproof ring is not easily deformed, avoiding a clearance from being generated between the waterproof ring and the body. Thus, the sealing performance between the waterproof ring and the body is improved, preventing outside dust, moisture or the like from entering into the cabinet and improving the stable performance of electrical components in the cabinet. Since the locating protrusion is provided on the inner side of the clamping claws, when the clamping claws are curved and contracted inwardly by a relatively small radian, the diameter of the circle defined by the whole locating protrusion is reduced to a relatively large extent, and the clamping force generated under the action of the tightening screw cap is relatively large while improving the capability of the cable to resist the external tension force.

Further, a sealing membrane may be sealed on the end of the waterproof ring provided with the locating groove. In this way, after the mounting of the cable gland is finished, and when there is no need to mount a cable temporarily, the cabinet is sealed by the sealing membrane, thus avoiding outside dust, moisture or the like from entering into the cabinet so that the security, stable performance of the electrical components in the cabinet are improved and ensured.

Furthermore, the inner wall of the waterproof ring and the inner wall of the body may further be aligned in one plane. Thus, it is ensured that the inner walls of the waterproof ring and the body form one internal surface, so that the cable gland passes smoothly and the waterproof ring is less likely pushed out, further improving the sealing performance of the cable gland.

### BRIEF DESCRIPTION OF THE DRAWINGS

In order to illustrate the technical solutions according to the embodiments of the present application or in the prior art more clearly, drawings required in the description of the embodiments and the prior art will be described briefly hereinafter. Apparently, the drawings described hereinafter are only some embodiments of the present application, and other drawings may also be acquired according to these drawings by those skilled in the art without a creative work.

Figure 1 is a schematic structural view of a cable gland in the prior art;

Figure 2 is a schematic structural view of a body of the cable gland in the prior art;

Figure 3 is a schematic view seeing from direction A of Figure 2;

Figure 4 is a schematic structural view of a waterproof ring of the cable gland in the prior art;

Figure 5 is a schematic structural view of a tightening screw cap of the cable gland in the prior art;

Figure 6 is a schematic view seeing from direction B of Figure 5;

Figure 7 is a schematic structural view of a cable gland according to an embodiment of the present application;

Figure 8 is a schematic structural view of a body of the cable gland according to the embodiment of the present application;

Figure 9 is a sectional view of the body of the cable gland according to the embodiment of the present application;

Figure 10 is a schematic view seeing from direction C of Figure 8;

Figure 11 is a schematic structural view of a waterproof ring of the cable gland according to the embodiment of the present application;

Figure 12 is a sectional view of the waterproof ring of the cable gland according to the embodiment of the present application;

Figure 13 is a schematic structural view of a tightening screw cap of the cable gland according to the embodiment of the present application;

Figure 14 is a schematic view seeing from direction D of Figure 13; and

Figure 15 is a schematic structural view of a nut of the cable gland according to the embodiment of the present application.

### DETAILED DESCRIPTION OF THE INVENTION

An object of the present application is to provide a cable gland for improving the sealing performance of the cable gland.

The technical solutions in the embodiments of the present application will be described clearly and completely hereinafter in conjunction with the accompanying drawings in the embodiments of the present application. Obviously, the embodiments described are only part of the embodiments of the present application and not all. Based on the embodiments in the present application, all other embodiments acquired by those skilled in the art without making any creative efforts all fall into the protection scope of the present application.

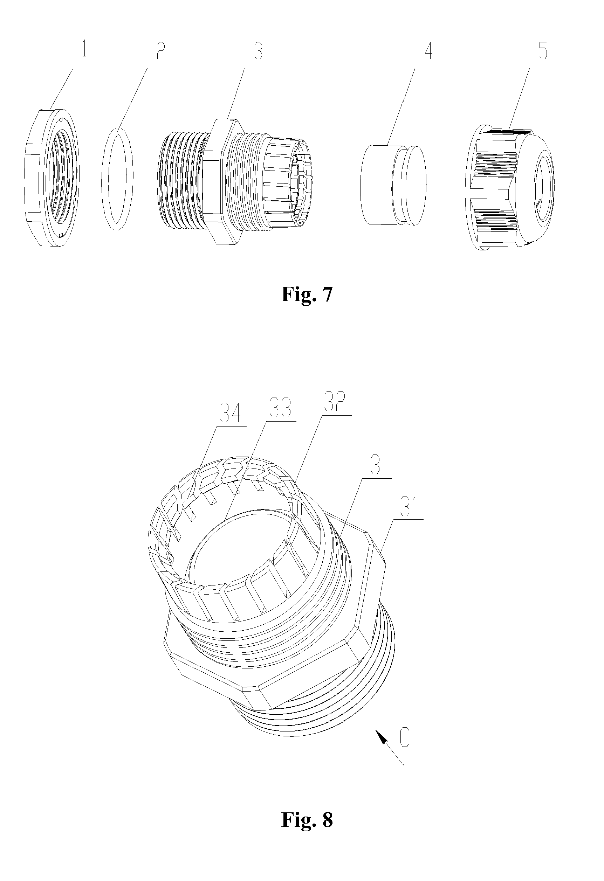

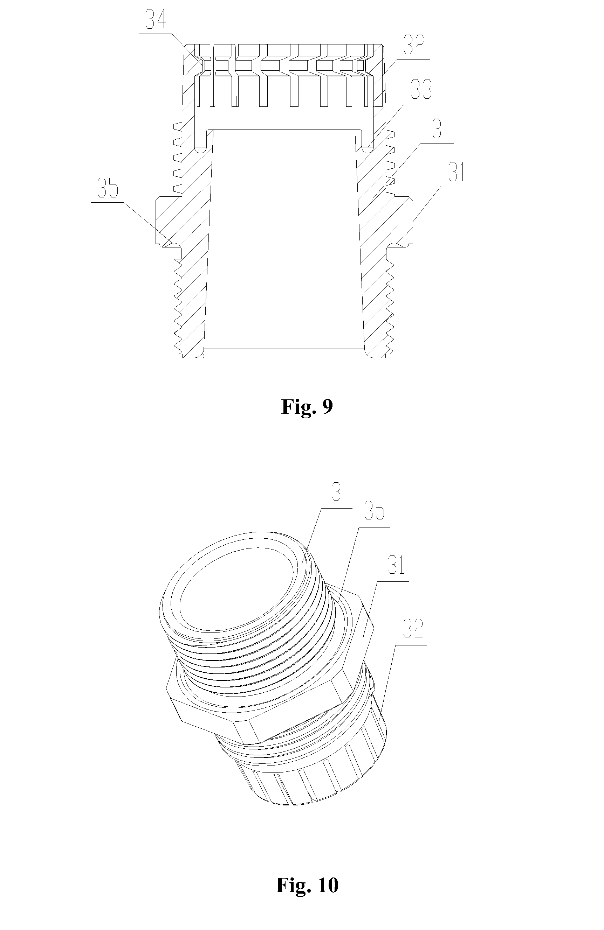

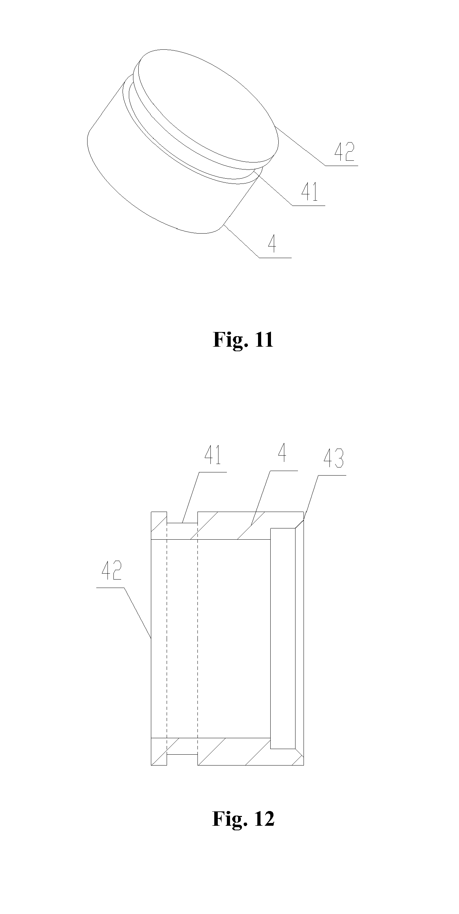

As shown in Figure 7, the cable gland according to the present application includes a nut 1, a waterproof ring 4, a tightening screw cap 5 and a body 3. As shown in Figures 8, 9 and 10, the body 3 is of a tubular shape and is provided with an external thread on its outer circumferential surface. A fixing protrusion 31 protruding outwards is provided on the outer circumferential surface of the body 3. Clamping claws 32 are provided at a clamping end of the body 3, extend in the axial direction of the body 3, and are spaced by a gap. Generally, materials of the body 3 and the clamping claws 32 may be nylon or metal. Preferably, in the embodiment of the present application, the material of the body 3 is metal and the material of the clamping claws 32 is nylon. Of course, other materials may be used, so long as the same technical effect can be achieved. The nut 1 is engaged with a fixed end of the body 3. A locating protrusion 34 is provided at the inner side of the clamping claws 32. A limiting groove 33 being open towards the locating protrusion 34 is provided on an inner wall of the body 3. As shown in Figures 11 and 12, a locating groove 41 engaged with the locating protrusion 34 is provided at one end of the waterproof ring 4, and the other end of the waterproof ring 4 is configured to be inserted into the limiting groove 33. The tightening screw cap 5 is tightly screwed to the clamping end of the body 3.

The mounting process of the cable gland and the fixation process of the cable according to the present application are the same as those in the prior art. The cable may pass through the tightening screw cap 5, the waterproof ring 4, the body 3 and the nut 1 in sequence, or it may pass through the nut 1, the body 3, the waterproof ring 4 and the tightening screw cap 5 in sequence as well. Of course, the cable may also be mounted in other orders, so long as the same technical effect may be achieved. No matter in which order the mounting is performed, in the process of mounting, as the cable passes through the waterproof ring 4 and the body 3, the locating grove 41 at one end of the waterproof ring 4 is engaged with the locating protrusion 34 on the inner side of the clamping claws 32, and the other end of the waterproof ring 4 is inserted into the limiting groove 33 of the body 3. In this way, the position of the waterproof ring 4 is limited by two ends thereof, therefore avoiding the waterproof ring 4 from being pushed out to shift or fall off by the cable, and the waterproof ring 4 is not easily deformed, avoiding a clearance from being generated between the waterproof ring 4 and the body 3. Thus, the sealing performance between the waterproof ring 4 and the body 3 is improved, preventing outside dust, moisture or the like from entering into the cabinet and improving the security and the stable performance of electrical components in the cabinet. Since the locating protrusion 34 is provided on the inner side of the clamping claws 32, when the clamping claws 32 curve inwardly by a relatively small radian, the diameter of the circle defined by the whole locating protrusion 34 is reduced to a relatively large extent, and the clamping force generated under the action of the tightening screw cap 5 is relatively large while improving the capability of the cable to resist the external tension force.

Further, as shown in Figure 11, a sealing membrane 42 may be sealed on one end of the waterproof ring 4 close to the locating groove 41. In this way, after the mounting of the cable gland is finished, and when there is no need to mount a cable temporarily, the cabinet is sealed by the sealing membrane 42, thus avoiding outside dust, moisture or the like from entering into the cabinet so that the performance of the electrical components in the cabinet is improved. Generally, the waterproof ring 4 is made of an elastic material, and the material of the sealing membrane 42 may be the same as or different from that of the waterproof ring 4. Preferably, in the embodiments of the present application, the waterproof ring 4 may be a rubber waterproof ring, and the sealing membrane 42 may be a rubber sealing membrane integrated with the rubber waterproof ring.

Furthermore, in order to ensure the sealing performance of the cable gland, an inner wall of the waterproof ring 4 and the inner wall of the body 3 may be aligned in one plane. In this way, when the cable passes through the body 3 and the waterproof ring 4, since the inner wall of the waterproof ring 4 and the inner wall of the body 3 are leveled in one plane, there is no convex or concave part to obstruct the cable from passing through, thereby further avoiding the waterproof ring 4 from being pushed out by the cable, improving the sealing performance of the cable gland, reducing misoperation, and facilitating the simpler and quicker mounting operation. In order to allow the inner walls of the waterproof ring 4 and the body 3 to be aligned in one plane, in the embodiment of the present application, the internal surface of the end of the waterproof ring 4 inserted into the limiting groove 33 is concaved outwardly to form a step 43, and an external surface of the end of the waterproof ring 4 inserted into the limiting groove 33 is a smooth cylinder surface. Of course, the end of the waterproof ring 4 inserted into the limiting groove 33 may be in other forms so long as the inner walls of the waterproof ring 4 and the body 3 are in one plane.

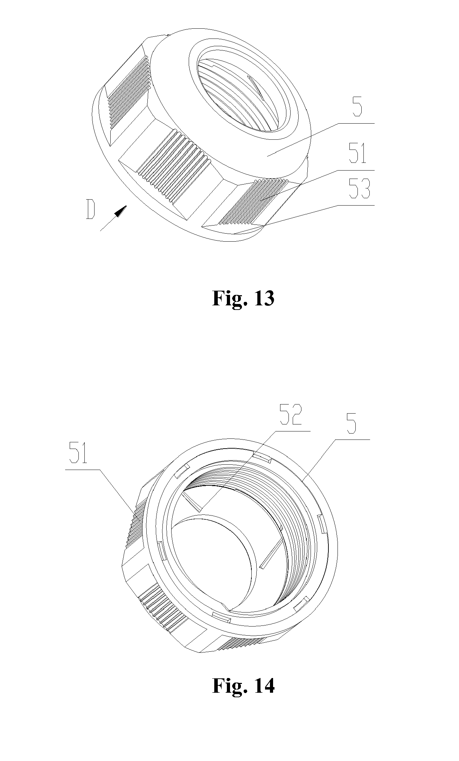

In order to avoid the tightening screw cap 5 from moving back, getting loose or even falling off automatically under the action of the mechanical vibration, for those skilled in the art, a locking protrusion 52 (as shown in Figure 14) may further be provided on an inner wall of the tightening part of the tightening screw cap 5 such as to be stuck in the gap between two adjacent clamping claws 32. In this way, when the mechanical vibration occurs, since the locking protrusion 52 is stuck in the gap between two adjacent clamping claws 32, the rotation of the tightening screw cap 5 is hindered, thereby avoiding the tightening screw cap 5 from loosening and falling off, ensuring the sealing performance of the cable gland and reducing the occurrence of failure. Generally, the extending directions of the locking protrusion 52 and the gap between two adjacent clamping claws 32 may be configured by those skilled in the art such as to be the same as a direction in which the tightening screw cap 5 is tightened.

In order to ensure the sealing performance between the body 3 and the cabinet, an O-shaped sealing ring may further be provided between the body 3 and the cabinet. In order to prevent the O-shaped sealing ring from crinkling to influence the sealing performance in the process of screwing, generally, an O-shaped sealing ring with a circular cross-section will be chosen by those skilled in the art. A sealing groove fitting with the O-shaped sealing ring is provided on the side of the fixing protrusion 31 of the body 3 towards the fixed end.

Further, a spanner stop protrusion 53 (as shown in Figure 13) protruding outwards may be provided on an outer circumferential surface of the tightening screw cap 5. In this way, the body 3 will be free from the influence of the spanner when the tightening screw cap 5 is wrenched, thus avoiding the damage to the body 3, avoiding clamping repeatedly, reducing misoperation, facilitating the simpler and quicker mounting operation, further improving the mounting efficiency, and increasing the strength of the whole tightening screw cap 5. Preferably, in the embodiment of the present application, the spanner stop protrusion 53 is arranged at an end of the tightening screw cap 5. Of course, the spanner stop protrusion 53 may also be arranged at a middle part of the tightening screw cap so long as the same technical effect can be achieved. The spanner stop protrusion 53 may be discontinuous, or may be continuous. Preferably, in the embodiment of the present application, the spanner stop protrusion 53 is configured as a circular continuous protrusion.

In order to prevent the slippage between the spanner and the tightening screw cap 5, for those skilled in the art, an anti-skid stripe 51 (as shown in Figures 13 and 14) extending in a direction same as the axis direction of the tightening screw cap 5 may be provided on an outer circumferential surface of the tightening screw cap 5. Because of the anti-skid stripe 51, the friction coefficient between the spanner and the tightening screw cap 5 is increased, and the slippage between the spanner and the tightening screw cap 5 is avoided effectively, thereby decreasing misoperation and facilitating the simpler and quicker mounting operation.

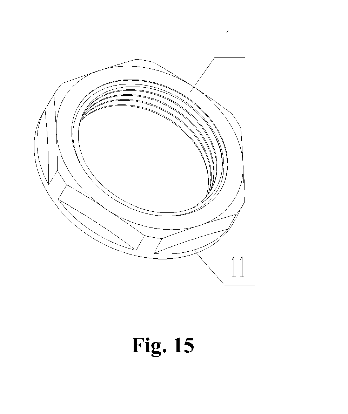

In order to avoid the spanner from scratching an inner wall of the cabinet in the mounting operation, the spanner stop protrusion 11 (as shown in Figure 15) protruding outwards may also be provided on the nut 1. Reference may be made to the spanner stop protrusion 53 for the arrangement and the function of the spanner stop protrusion 11.

Generally, the nut 1 may be designed as a hexagon nut, and the tightening screw cap 5 may be designed as a hexagon screw cap, and the fixing protrusion 31 may be designed as a hexagon fixing protrusion, for those skilled in the art. Thus, the same tool may be employed to perform the mounting, which facilitates the simpler and quicker mounting process.

The above description of the disclosed embodiments enables those skilled in the art to implement or use the present disclosure. Various modifications to those embodiments will be apparent for those skilled in the art. The general principle defined herein may be implemented in other embodiments without departing from the spirit or the scope of the present disclosure. Accordingly, the present disclosure will not be limited to those embodiments illustrated herein, but will fall into the widest scope which conforms to the principle and novel features disclosed herein.

## Claims

1. A cable gland comprising a nut (1), a waterproof ring (4), a tightening screw cap (5), and a tubular body (3) with external thread, wherein a clamping end of the body (3) is provided with clamping claws (32) spaced by a gap and extending in an axial direction of the body (3), a fixing protrusion (31) protruding outwards is provided on an outer circumferential surface of the body (3), and the nut (1) is configured to be engaged with a fixed end of the body (3), and
wherein a locating protrusion (34) is provide on an inner side of the clamping claws (32), a limiting groove (33) being open towards the locating protrusion (34) is provided on an inner wall of the body (3); a locating groove (41) fitted with the locating protrusion (34) is provided at one end of the waterproof ring (4), the other end of the waterproof ring (4) is configured to be inserted into the limiting groove (33); and the tightening screw cap (5) is configured to be tightly screwed to the clamping end of the body (3).

2. The cable gland according to claim 1, wherein a sealing membrane (42) is sealed on one end of the waterproof ring (4) close to the locating groove (41).

3. The cable gland according to claim 2, wherein an inner wall of the waterproof ring (4) and the inner wall of the body (3) are aligned in one plane.

4. The cable gland according to any one of claims 1 to 3, wherein a locking protrusion (52) is provided on an inner wall of a tightening part of the tightening screw cap (5), and is configured to be stuck in the gap between two adjacent clamping claws (32).

5. The cable gland according to claim 4, wherein extending directions of the locking protrusion (52) and the gap between two adjacent clamping claws (32) are all the same as a direction in which the tightening screw cap (5) is tightened.

6. The cable gland according to any one of claims 1 to 3, further comprising an O-shaped sealing ring (2) with a circular cross-section, wherein a sealing groove (35) fitted with the O-shaped sealing ring (2) is provided on a side of the fixing protrusion (31) towards the fixed end.

7. The cable gland according to any one of claims 1 to 3, wherein the tightening screw cap (5) has a spanner stop protrusion (53) protruding outwards.

8. The cable gland according to claim 7, wherein anti-skid stripes (51) extending in a direction same as an axis direction of the tightening screw cap (5) is provided on an outer circumferential surface of the tightening screw cap (5).

9. The cable gland according to claim 8, wherein the nut (1) has a spanner stop protrusion (11) protruding outwards.

10. The cable gland according to claim 9, wherein the nut (1) is a hexagon nut, the tightening screw cap (5) is a hexagon screw cap, and the fixing protrusion (31) is a hexagon fixing protrusion.
